# EUROPEAN PATENT APPLICATION

(11) **EP 3 731 381 A1**
(43) Date of publication of application: **28.10.2020**
(21) Application number: 20168686.2
(22) Date of filing: 08.04.2020
(51) Int. Cl.: H02K 7/00, F16D 1/08, F16D 1/10

(54) **TRANSMISSION SYSTEM**

(30) Priority: 26.04.2019 JP 2019086757
(71) Applicant: Toyota Jidosha Kabushiki Kaisha, Toyota-shi, Aichi-ken 471-8571 (JP)
(72) Inventor: KUWAMOTO, Hiroki, Toyota-shi, Aichi-ken 471-8571 (JP); KITAHATA, Takeshi, Toyota-shi, Aichi-ken 471-8571 (JP)
(74) Representative: D Young & Co LLP

(57) **Abstract**

Provided is a transmission system (14) including: a gear shaft (42) that receives a force acting in a direction perpendicular to a rotational centerline (C); a rotor shaft (40) that is rotatably supported at both ends on the same rotational centerline (C) as the gear shaft (42), spline-fitted with the gear shaft (42), and coupled to a rotor (34) of an electric motor (30); and an elastic member (62) that is press-fitted between an inner circumferential surface (40i) and an outer circumferential surface (44o) of the gear shaft (42) and the rotor shaft (40) that face each other in a radial direction centered at the rotational centerline (C). An amount of compression of the rubber member (62) as the elastic member in the radial direction increases from a press-fitting start position (Psta) toward a press-fitting end position (Pend) located respectively on a leading end side and a base end side at one end of the rotor shaft (40).

## Description

### BACKGROUND OF THE INVENTION

### 1. Field of the Invention

The present invention relates to a technique for mitigating noise occurring in a transmission system including a gear shaft and a rotor shaft coupled to a rotor of a rotating machine, with the gear shaft and the rotor shaft spline-fitted with each other on the same rotational centerline.

### 2. Description of Related Art

There are known transmission systems in which an outer circumferential surface of a gear shaft and an inner circumferential surface of a rotor shaft are coupled together by spline fitting, and an elastic member is press-fitted between the outer circumferential surface of the gear shaft and the inner circumferential surface of the rotor shaft to mitigate gear rattling sound at a spline-fitting part. One example of such transmission systems is described in Japanese Patent Application Publication No. 2016-118249 (JP 2016-118249 A). JP 2016-118249 A discloses a transmission system in which an elastic member that is press-fitted between a gear shaft and a rotor shaft, provided respectively on an inner circumferential side and an outer circumferential side at a spline-fitting part, has a tapered outer circumferential surface.

### SUMMARY OF THE INVENTION

Considering the efficiency of assembling the rotor shaft and the gear shaft in the transmission system described in JP 2016-118249 A, it seems that the elastic member is first installed on an outer circumferential surface of the gear shaft and then the gear shaft with the elastic member installed thereon is inserted into the inner circumferential side of the rotor shaft to thereby press-fit the elastic member. The tapered outer circumferential surface of the elastic member is formed such that the outside diameter of the elastic member increases gradually from a press-fitting start position toward a press-fitting end position of press-fitting the elastic member. This means that in JP 2016-118249 A, the elastic member is interposed between the gear shaft and the rotor shaft with the amount of compression of the elastic member increasing toward a leading end side at one end of the rotor shaft. Therefore, when the gear shaft is inclined under the influence of a radial force acting in a direction perpendicular to the rotational centerline, the radial force transmitted from the gear shaft to the rotor shaft through the elastic member tends to exert a greater moment on the rotor shaft, resulting in a greater inclination of the rotor shaft. If a rotor of a rotating machine coupled to the rotor shaft rotates in an inclined state, the rotating machine is likely to vibrate and may thereby cause noise.

The present invention provides a transmission system in which inclination of a rotor shaft due to a radial force transmitted thereto from a gear shaft through an elastic member is reduced to mitigate occurrence of noise.

An aspect of the present invention relates to a transmission system including a gear shaft, a rotor shaft, and an elastic member. The gear shaft is configured to receive a force acting in a direction perpendicular to a rotational centerline. The rotor shaft is rotatably supported at both ends on the same rotational centerline as the gear shaft, spline-fitted with the gear shaft, and coupled to a rotor of a rotating machine. The elastic member is press-fitted between an inner circumferential surface and an outer circumferential surface of the gear shaft and the rotor shaft that face each other in a radial direction centered at the rotational centerline. An amount of compression of the elastic member in the radial direction increases from a press-fitting start position toward a press-fitting end position located respectively on a leading end side and a base end side at one end of the rotor shaft.

In the transmission system of the above aspect, the elastic member press-fitted between the inner circumferential surface and the outer circumferential surface of the gear shaft and the rotor shaft that face each other in the radial direction centered at the rotational centerline reduces gear rattling sound that occurs at a spline-fitting part due to rotational variation. The amount of compression of the elastic member in the radial direction increases from the press-fitting start position toward the press-fitting end position located respectively on the leading end side and the base end side at the one end of the rotor shaft. Thus, a force that the rotor shaft receives from the gear shaft through the elastic member increases in the direction of the rotational centerline from the leading end side toward the base end side at the one end of the rotor shaft. Therefore, when the gear shaft is inclined under the influence of a radial force, a smaller moment acts on the rotor shaft due to the inclination of the gear shaft, resulting in a smaller inclination of the rotor shaft in the present invention, compared with if a force that the rotor shaft receives from the gear shaft through the elastic member is larger on the leading end side than the base end side at the one end of the rotor shaft or equal on the leading end side and the base end side. As a result, vibration that occurs as the rotor of the rotating machine coupled to the rotor shaft rotates in an inclined state is mitigated, and so is occurrence of noise.

In the above aspect, an inner circumferential surface of the elastic member may be in contact with an outer circumferential surface of the gear shaft, and the inside diameter of the elastic member before being press-fitted may decrease from the press-fitting start position toward the press-fitting end position.

In the transmission system having the above configuration, the inner circumferential surface of the elastic member is in contact with the outer circumferential surface of the gear shaft, and the inside diameter of the elastic member before being press-fitted decreases from the press-fitting start position toward the press-fitting end position. In the case where the inner circumferential surface of the elastic member is in contact with the outer circumferential surface of the gear shaft, i.e., the elastic member is press-fitted between the inner circumferential surface of the rotor shaft and the outer circumferential surface of the gear shaft, the inside diameter of the elastic member before being press-fitted decreases from the press-fitting start position toward the press-fitting end position located respectively on the leading end side and the base end side at the one end of the rotor shaft. Thus, the elastic member while being press-fitted receives a small resistance from the gear shaft at the start of press fitting and this resistance becomes gradually larger toward the end of press fitting, which makes it easy to assemble the rotor shaft and the gear shaft.

In the above configuration, the elastic member may be a cylindrical rubber member. Alternatively, the elastic member may be a metal member that includes a substantially ring-shaped annular part and a plurality of projections provided so as to project inward in the radial direction.

In the above aspect, an outer circumferential surface of the elastic member may be in contact with an inner circumferential surface of the gear shaft, and the outside diameter of the elastic member before being press-fitted may increase from the press-fitting start position toward the press-fitting end position.

In the transmission system having the above configuration, the outer circumferential surface of the elastic member is in contact with the inner circumferential surface of the gear shaft, and the outside diameter of the elastic member before being press-fitted increases from the press-fitting start position toward the press-fitting end position. In the case where the outer circumferential surface of the elastic member is in contact with the inner circumferential surface of the gear shaft, i.e., the elastic member is press-fitted between the outer circumferential surface of the rotor shaft and the inner circumferential surface of the gear shaft, the outside diameter of the elastic member before being press-fitted increases from the press-fitting start position toward the press-fitting end position located respectively on the leading end side and the base end side at the one end of the rotor shaft. Thus, the elastic member while being press-fitted receives a small resistance from the gear shaft at the start of press fitting and this resistance becomes gradually larger toward the end of press fitting, which makes it easy to assemble the rotor shaft and the gear shaft.

In the above configuration, the elastic member may be a cylindrical rubber member. Alternatively, the elastic member may be a metal member that includes a substantially ring-shaped annular part and a plurality of projections provided so as to project outward in the radial direction.

In the above aspect, one circumferential surface of an inner circumferential surface and an outer circumferential surface of the elastic member may be in contact with an outer circumferential surface or an inner circumferential surface of the gear shaft, and the thickness of the elastic member before being press-fitted may increase from the press-fitting start position toward the press-fitting end position.

In the transmission system having the above configuration, one circumferential surface of the inner circumferential surface and the outer circumferential surface of the elastic member is in contact with the outer circumferential surface or the inner circumferential surface of the gear shaft, and the thickness of the elastic member before being press-fitted increases from the press-fitting start position toward the press-fitting end position. Thus configured, the elastic member while being press-fitted receives a small resistance from the gear shaft at the start of press fitting and this resistance becomes gradually larger toward the end of press fitting. A force that the rotor shaft receives from the gear shaft through the elastic member increases in the direction of the rotational centerline from the leading end side toward the base end side at the one end of the rotor shaft. Thus, the rotor shaft and the gear shaft are easy to assemble. Moreover, gear rattling sound that occurs at the spline-fitting part due to rotational variation is reduced, and occurrence of noise attributable to inclination of the rotor shaft under a moment acting thereon due to inclination of the gear shaft is mitigated.

In the above configuration, the one circumferential surface may be the inner circumferential surface of the elastic member, and the inside diameter of the elastic member before being press-fitted may decrease from the press-fitting start position toward the press-fitting end position.

In the transmission system having the above configuration, the one circumferential surface is the inner circumferential surface of the elastic member, and the inside diameter of the elastic member before being press-fitted decreases from the press-fitting start position toward the press-fitting end position. In the case where the inner circumferential surface of the elastic member is in contact with the outer circumferential surface of the gear shaft, i.e., the elastic member is press-fitted between the inner circumferential surface of the rotor shaft and the outer circumferential surface of the gear shaft, the inside diameter of the elastic member before being press-fitted decreases from the press-fitting start position toward the press-fitting end position located respectively on the leading end side and the base end side at the one end of the rotor shaft. Thus, the rotor shaft and the gear shaft are easy to assemble, and occurrence of noise is mitigated as a moment acting on the rotor shaft due to inclination of the gear shaft is reduced.

In the above configuration, the one circumferential surface may be the outer circumferential surface of the elastic member, and the outside diameter of the elastic member before being press-fitted may increase from the press-fitting start position toward the press-fitting end position.

In the transmission system having the above configuration, the one circumferential surface is the outer circumferential surface of the elastic member, and the outside diameter of the elastic member before being press-fitted increases from the press-fitting start position toward the press-fitting end position. In the case where the outer circumferential surface of the elastic member is in contact with the inner circumferential surface of the gear shaft, i.e., the elastic member is press-fitted between the outer circumferential surface of the rotor shaft and the inner circumferential surface of the gear shaft, the outside diameter of the elastic member before being press-fitted increases from the press-fitting start position toward the press-fitting end position located respectively on the leading end side and the base end side at the one end of the rotor shaft. Thus, the rotor shaft and the gear shaft are easy to assemble, and occurrence of noise is mitigated as a moment acting on the rotor shaft due to inclination of the gear shaft is reduced.

In the above aspect, the rotating machine may be a vehicle driving source equipped with the transmission system.

In the transmission system having the above configuration, the rotating machine is a vehicle driving source. When the rotating machine is a vehicle driving source, gear rattling sound (noise) that occurs at the spline-fitting part due to rotational variation is reduced. Moreover, a moment acting on the rotor shaft due to inclination of the gear shaft is reduced, so that noise that occurs as the rotor of the rotating machine coupled to the rotor shaft rotates in an inclined state is mitigated. With noise occurring in the transmission system thus reduced, an unpleasant feeling that a driver of the vehicle feels is alleviated.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic view of a vehicle equipped with a transmission system according to a first embodiment of the present invention;
FIG. 2 is a sectional view of a rotor shaft, a gear shaft, and a friction damper of the transmission system shown in FIG. 1 taken along the direction of a rotational centerline, illustrating press fitting of the friction damper;
FIG. 3 is a sectional view of the rotor shaft, the gear shaft, and a friction damper of a transmission system according to a second embodiment of the present invention taken along the direction of the rotational centerline, illustrating press fitting of the friction damper;
FIG. 4 is a schematic view of a vehicle equipped with a transmission system according to a third embodiment of the present invention;
FIG. 5 is a sectional view of a rotor shaft, a gear shaft, and a friction damper of the transmission system shown in FIG. 4 taken along the direction of the rotational centerline, illustrating press fitting of the friction damper;
FIG. 6 is a sectional view of the rotor shaft, the gear shaft, and a friction damper of a transmission system according to a fourth embodiment of the present invention taken along the direction of the rotational centerline, illustrating press fitting of the friction damper;
FIG. 7 is a view of a tolerance ring according to a fifth embodiment of the present invention as seen from the direction of the rotational centerline;
FIG. 8 is a view of the tolerance ring shown in FIG. 7, as developed in a circumferential direction and seen from an inner circumferential side in a radial direction centered at the rotational centerline;
FIG. 9 is a sectional view of the tolerance ring taken along cutting line IX-IX shown in FIG. 7;
FIG. 10 is a view of a tolerance ring according to a sixth embodiment of the present invention as seen from the direction of the rotational centerline;
FIG. 11 is a view of the tolerance ring shown in FIG. 10, as developed in a circumferential direction and seen from an outer circumferential side in a radial direction centered at the rotational centerline; and
FIG. 12 is a sectional view of the tolerance ring taken along cutting line XII-XII shown in FIG. 10.

### DETAILED DESCRIPTION OF EMBODIMENTS

Embodiments of the present invention will be described in detail below with reference to the drawings. In each of the following embodiments, the drawings are simplified or deformed as necessary for easy understanding, and the dimensional ratios, the shapes, etc. of parts are not necessarily accurately represented. The description of each embodiment will be focused on differences from a preceding embodiment, and those parts that are substantially common to the embodiment and the preceding embodiment in terms of function will be denoted by the same reference signs and the description thereof will be omitted as appropriate.

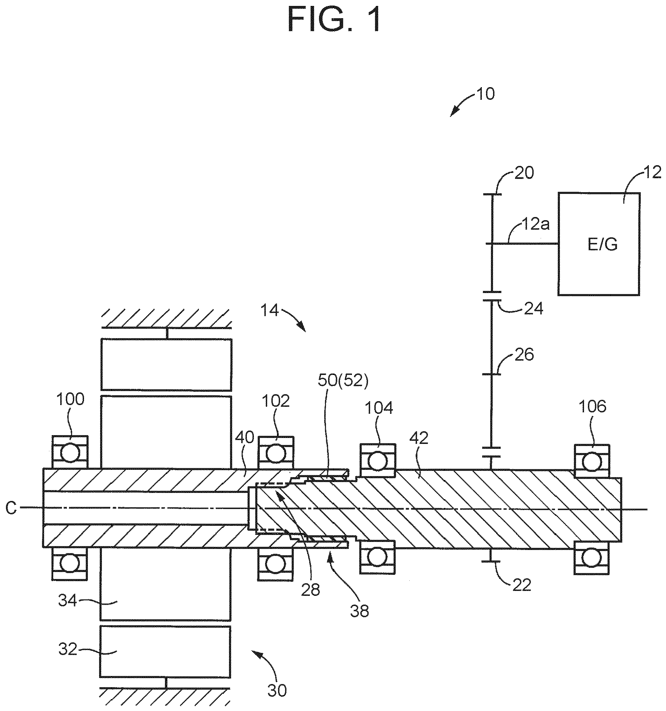

FIG. 1 is a schematic view of a vehicle 10 equipped with a transmission system 14 according to a first embodiment of the present invention. The vehicle 10 includes an engine 12, an electric motor 30, and the transmission system 14. The transmission system 14 is provided on a power transmission path between the engine 12 and the electric motor 30 on one side and a pair of driving wheels (not shown) on the other side. The reference sign in parentheses in FIG. 1 is for a second embodiment to be described later. In FIG. 1, a rotor shaft 40, a gear shaft 42, a pair of first bearing 100 and second bearing 102, a pair of third bearing 104 and fourth bearing 106, and the electric motor 30, all to be described later, are shown as a sectional view, while a part of the power transmission path from the engine 12 to the gear shaft 42 is shown as a skeleton diagram.

Both the engine 12 and the electric motor 30 are vehicle driving sources of the vehicle 10. The engine 12 is an internal combustion engine, for example, a gasoline engine or a diesel engine, and outputs generated power to a crankshaft 12a. The electric motor 30 is a commonly known vehicle driving electric motor. The electric motor 30 includes a stator 32 and a rotor 34. The electric motor 30 is an example of the "rotating machine" of the present invention.

The transmission system 14 includes the crankshaft 12a, a first output gear 20, a large-diameter gear 24, a counter shaft 26, a second output gear 22, the gear shaft 42, and the rotor shaft 40. The crankshaft 12a is an output shaft of the engine 12, and the first output gear 20 is fixedly provided on an outer circumference of the crankshaft 12a. The second output gear 22 is fixedly provided on an outer circumference of the gear shaft 42. The large-diameter gear 24 meshing with both the first output gear 20 and the second output gear 22 is provided on an outer circumference of the counter shaft 26. Power output from the engine 12 is transmitted to the gear shaft 42 through the crankshaft 12a, the first output gear 20, the large-diameter gear 24, and the second output gear 22.

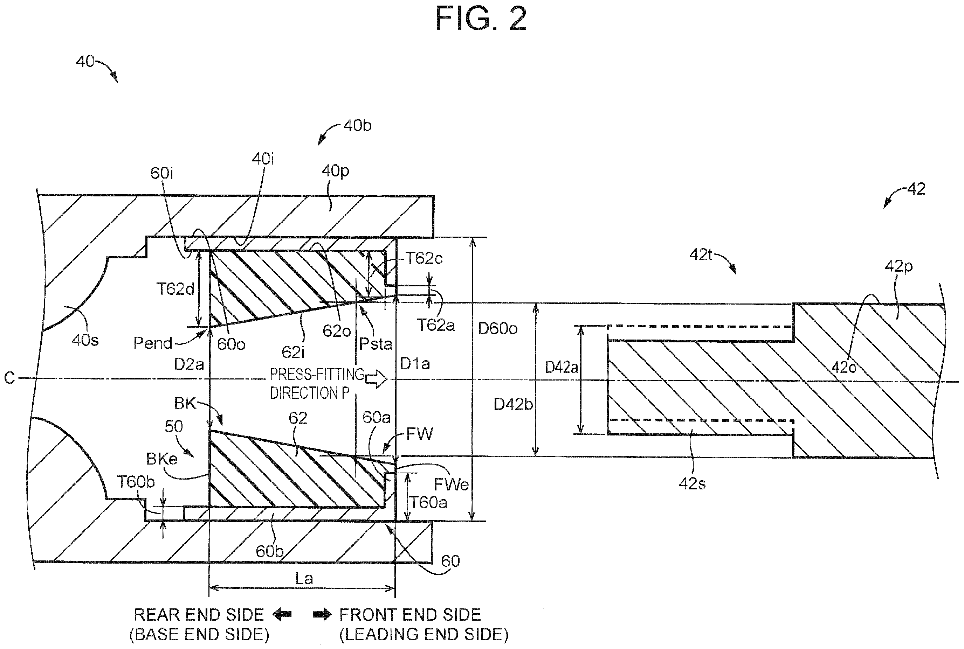

The gear shaft 42 is rotatably supported at both ends on a rotational centerline C by the pair of third bearing 104 and fourth bearing 106. The rotor shaft 40 is rotatably supported at both ends on the same rotational centerline C as the gear shaft 42 by the pair of first bearing 100 and second bearing 102. The rotor shaft 40 has an inner circumferential surface 40i (see FIG. 2) and the gear shaft 42 has an outer circumferential surface 42o (see FIG. 2) that face each other in a radial direction centered at the rotational centerline C and are spline-fitted with each other at a spline-fitting part 28. Thus, the rotor shaft 40 and the gear shaft 42 are coupled together so as not to be able to rotate relatively to each other. A friction damper 50 is press-fitted in an annular space between the inner circumferential surface 40i of the rotor shaft 40 and the outer circumferential surface 42o of the gear shaft 42, at an elastic member press-fitting part 38 adjacent to the spline-fitting part 28 in the direction of the rotational centerline C. The elastic member press-fitting part 38 is located between the second bearing 102 and the third bearing 104 in the direction of the rotational centerline C. The friction damper 50 is press-fitted to reduce gear rattling sound that occurs at the spline-fitting part 28, for example, when the output torque of the electric motor 30 is close to zero and rotational variation of the gear shaft 42 occurs.

The first output gear 20, the large-diameter gear 24, and the second output gear 22 are, for example, helical gears. Therefore, the gear shaft 42 receives a force acting in a direction perpendicular to the rotational centerline C (i.e., a radial force) from the second output gear 22. Upon receiving a radial force, the gear shaft 42 rotates at an angle relative to the rotational centerline C. The direction of the rotational centerline C is an axial direction, and a direction perpendicular to the rotational centerline C is a radial direction.

The rotor shaft 40 has a cylindrical shape centered at the rotational centerline C and is coupled to the rotor 34 of the electric motor 30. The rotor shaft 40 transmits power output from the electric motor 30 to the gear shaft 42.

FIG. 2 is a sectional view of the rotor shaft 40, the gear shaft 42, and the friction damper 50 of the transmission system 14 shown in FIG. 1 taken along the direction of the rotational centerline C, illustrating press fitting of the friction damper 50. FIG. 2 shows a state after the friction damper 50 is fitted on the inner circumferential surface 40i at a press-fitting part 40p and before a protrusion 42t of the gear shaft 42 is inserted into an inner circumferential side of the friction damper 50, i.e., before the friction damper 50 is press-fitted.

A bore section 40b that is hollow at a central portion in the radial direction centered at the rotational centerline C is provided on a side of the rotor shaft 40 closer to the gear shaft 42 that is one end side of the rotor shaft 40. A part of the bore section 40b on an open side in the direction of the rotational centerline C is the press-fitting part 40p at which the friction damper 50 is press-fitted. Spline teeth 40s are provided on a part of the inner circumferential surface 40i of the rotor shaft 40, on a side of the rotor shaft 40 closer to the center of gravity thereof than the press-fitting part 40p of the bore section 40b is in the direction of the rotational centerline C. The protrusion 42t extending along the direction of the rotational centerline C from a central portion of the gear shaft 42 in the radial direction centered at the rotational centerline C is provided on a side of the gear shaft 42 closer to the rotor shaft 40 that is one end side of the gear shaft 42. Spline teeth 42s are provided on a part of the outer circumferential surface 42o, on a leading end side of the protrusion 42t in the direction of the rotational centerline C. A part of the gear shaft 42 closer to the center of gravity thereof than a portion of the protrusion 42t at which the spline teeth 42s are provided is in the direction of the rotational centerline C is a press-fitting part 42p at which the friction damper 50 is press-fitted.

The friction damper 50 includes a metal member 60 and a rubber member 62 that is the elastic member.

A direction along the direction of the rotational centerline C in which the rubber member 62 that is an elastic member is press-fitted onto the gear shaft is a "press-fitting direction." Of the metal member 60 and the rubber member 62, portions on a front side in the press-fitting direction are "front-end portions" and portions on a rear side in the press-fitting direction are "rear-end portions." When the rubber member 62 that is an elastic member is press-fitted, a position in the direction of the rotational centerline C at which one circumferential surface of an inner circumferential surface and an outer circumferential surface of the elastic member comes first into contact with the outer circumferential surface or the inner circumferential surface of the gear shaft is a "press-fitting start position," and a position at which the one circumferential surface comes last into contact is a "press-fitting end position." "The press-fitting direction," "the press-fitting start position," and "the press-fitting end position" in this embodiment are shown in FIG. 2 as a press-fitting direction P indicated by the outlined arrow, a press-fitting start position Psta, and a press-fitting end position Pend. In FIG. 2, a front-end portion FW is the frontend portion of the rubber member 62, and a rear-end portion BK is the rear-end portion of the rubber member 62. A front end FWe is a front end of the rubber member 62 on a most front side in the press-fitting direction P, and a rear end BKe is a rear end of the rubber member 62 on a most rear side in the press-fitting direction P. In the direction of the rotational centerline C, both the press-fitting start position Psta and the press-fitting end position Pend are located between the front end FWe and the rear end BKe in the press-fitting direction P. In the direction of the rotational centerline C, the press-fitting start position Psta is located frontward of the press-fitting end position Pend in the press-fitting direction P.

In the direction of the rotational centerline C, the side of the front-end portion FW of the rubber member 62 is synonymous with the leading end side at the one end of the rotor shaft 40, and the side of the rear-end portion BK of the rubber member 62 is synonymous with the base end side at the one end of the rotor shaft 40 that is the side closer to the center of gravity of the rotor shaft 40. Therefore, the press-fitting start position Psta is located on the side of the front-end portion FW of the rubber member 62 (the leading end side at the one end of the rotor shaft 40), and the press-fitting end position Pend is located on the side of the rear-end portion BK of the rubber member 62 (the base end side at the one end of the rotor shaft 40).

In the direction of the rotational centerline C, the length of the rubber member 62 from the front end FWe to the rear end BKe is a length La [mm]. While a front end of the metal member 60 is located at the same position as the front end FWe of the rubber member 62, a rear end of the metal member 60 is located rearward of the rear end BKe of the rubber member 62 in the press-fitting direction P. Thus, in the direction of the rotational centerline C, the length of the metal member 60 from the front end to the rear end is longer than the length La.

The metal member 60 has a cylindrical shape centered at the rotational centerline C. The metal member 60 has an inner protruding part 60a and a cylindrical part 60b. The cylindrical part 60b has a shape of a cylinder with a thickness of T60b [mm]. The inner protruding part 60a is provided at a front-end portion of the cylindrical part 60b and protrudes toward the inner circumferential side in the radial direction centered at the rotational centerline C. In the radial direction, a thickness T60 of the metal member 60 at a front-end portion is a thickness T60a [mm], and the thickness T60 of the metal member 60 at a rear-end portion is the thickness T60b.

An outer circumferential surface 60o of the metal member 60 faces the inner circumferential surface 40i of the press-fitting part 40p. An outside diameter D60o of the metal member 60 is constant from a front end toward a rear end of the metal member 60 and equal to the inside diameter of the press-fitting part 40p. Thus, the metal member 60 can be fitted on the inner circumferential surface 40i of the press-fitting part 40p with the inner circumferential surface 40i of the press-fitting part 40p in contact with the outer circumferential surface 60o of the metal member 60.

The rubber member 62 has a cylindrical shape centered at the rotational centerline C. The rubber member 62 is fitted in the metal member 60 with an outer circumferential surface 62o of the rubber member 62 and an inner circumferential surface 60i of the metal member 60 in contact with each other. A thickness T62 of the rubber member 62 at the front end FWe is a thickness T62a [mm], and the thickness T62 of the rubber member 62 at the rear end BKe is a thickness T62d [mm]. The rubber member 62 has a lower elastic modulus than the press-fitting part 40p of the rotor shaft 40 and the press-fitting part 42p of the gear shaft 42.

In the direction of the rotational centerline C, the thickness T62 of the rubber member 62 increases from the front end FWe toward the rear end BKe of the rubber member 62 as follows. In a region in the direction of the rotational centerline C where the inner protruding part 60a is not located, the thickness T62 of the rubber member 62 increases (gradually) from a thickness T62c [mm] to the thickness T62d as the rubber member 62 extends from the front-end portion FW toward the rear-end portion BK. In a region in the direction of the rotational centerline C where the inner protruding part 60a is located, the thickness T62 of the rubber member 62 increases (gradually) from the thickness T62a to a thickness T62b [mm] {= T62c - (T60a - T60b) > T62a} as the rubber member 62 extends from the front-end portion FW toward the rear-end portion BK. From the region in the direction of the rotational centerline C where the inner protruding part 60a is located to the region where the inner protruding part 60a is not located, the thickness T62 of the rubber member 62 increases suddenly from the thickness T62b to the thickness T62c (> T62b) in a discontinuous manner. Thus, the thickness T62 of the rubber member 62 installed on the rotor shaft 40 and yet to be press-fitted increases from the press-fitting start position Psta toward the press-fitting end position Pend.

An inside diameter D62i [mm] of the rubber member 62 decreases (gradually) from the front end FWe toward the rear end BKe of the rubber member 62. The inside diameter D62i of the rubber member 62 at the front end FWe is a diameter D1a [mm], and the inside diameter D62i of the rubber member 62 at the rear end BKe is a diameter D2a [mm] (< D1a). Thus, the inside diameter D62i of the rubber member 62 installed on the rotor shaft 40 and yet to be press-fitted decreases from the press-fitting start position Psta toward the press-fitting end position Pend. As seen in the section along the direction of the rotational centerline C shown in FIG. 2, the inner circumferential surface 62i of the rubber member 62 is sloped (inclined) from the front end FWe toward the rear end BKe. Thus, as seen in the section along the direction of the rotational centerline C, the inner circumferential surface 62i of the rubber member 62 is sloped from the press-fitting start position Psta toward the press-fitting end position Pend. This slope has a constant angle relative to the rotational centerline C. The inner circumferential surface 62i is an example of the "one circumferential surface" of the present invention.

The inside diameter of the rotor shaft 40 at the press-fitting part 40p is larger than the inside diameter of the inner circumferential surface 40i at the part where the spline teeth 40s are provided. An outside diameter D42b [mm] of the gear shaft 42 at the press-fitting part 42p is larger than an outside diameter D42a [mm] of the spline teeth 42s provided on the outer circumferential surface 42o. The outside diameter D42b at the press-fitting part 42p is constant in the direction of the rotational centerline C. The outside diameter D42b is smaller than the diameter D1a and larger than the diameter D2a.

Before being press-fitted, the friction damper 50 is first fitted, i.e., installed, on the inner circumferential surface 40i of the press-fitting part 40p in the bore section 40b of the rotor shaft 40. Thereafter, the gear shaft 42 is inserted into the inner circumferential side of the rubber member 62 of the friction damper 50 having been fitted on the rotor shaft 40. As shown in FIG. 2, in the direction of the rotational centerline C, the inner circumferential surface 62i of the rubber member 62 comes first into contact with the outer circumferential surface 42o of the press-fitting part 42p of the gear shaft 42 at the press-fitting start position Psta at which the inside diameter D62i of the rubber member 62 is equal to the outside diameter D42b of the gear shaft 42 at the press-fitting part 42p. Further, as the gear shaft 42 is inserted into the inner circumferential side of the rubber member 62, the inner circumferential surface 62i of the rubber member 62 comes last into contact with the outer circumferential surface 42o of the press-fitting part 42p of the gear shaft 42 at the press-fitting end position Pend that is the rear end BKe of the rubber member 62.

As the gear shaft 42 is thus inserted into the rotor shaft 40 with the inner circumferential surface 62i of the rubber member 62 in contact with the outer circumferential surface 42o of the press-fitting part 42p of the gear shaft 42, the friction damper 50 is press-fitted between the inner circumferential surface 40i of the press-fitting part 40p and the outer circumferential surface 42o of the press-fitting part 42p. The metal member 60 is embedded between the outer circumferential surface 62o of the rubber member 62 and the inner circumferential surface 40i of the press-fitting part 40p. In addition, as the spline teeth 40s and the spline teeth 42s are fitted with each other, the rotor shaft 40 and the gear shaft 42 are spline-fitted with each other.

Resistance that the rubber member 62 receives from the gear shaft 42 (also resistance that the gear shaft 42 receives from the rubber member 62) while the friction damper 50 is press-fitted is smaller on the side of the press-fitting start position Psta and larger on the side of the press-fitting end position Pend. Specifically, the resistance that the rubber member 62 receives from the gear shaft 42 increases gradually from the press-fitting start position Psta toward the press-fitting end position Pend. When the friction damper 50 has been press-fitted, the rubber member 62 has been press-fitted between the outer circumferential surface 42o of the gear shaft 42 and the inner circumferential surface 40i of the rotor shaft 40, with the amount of compression of the rubber member 62 in the radial direction centered at the rotational centerline C increasing from the press-fitting start position Psta toward the press-fitting end position Pend. In other words, the rubber member 62 has been press-fitted between the gear shaft 42 and the rotor shaft 40, with a force that the rotor shaft 40 receives from the gear shaft 42 through the rubber member 62 increasing from the press-fitting start position Psta toward the press-fitting end position Pend at the one end of the rotor shaft 40. The amount of compression of the rubber member 62 in the radial direction centered at the rotational centerline C is obtained by subtracting the thickness T62 of the rubber member 62 after being press-fitted from the thickness T62 of the rubber member 62 before being press-fitted.

In this embodiment, the rubber member 62 press-fitted between the inner circumferential surface 40i of the rotor shaft 40 and the outer circumferential surface 42o of the gear shaft 42 reduces gear rattling sound that occurs at the spline-fitting part 28 due to rotational variation. The amount of compression of the rubber member 62 in the radial direction centered at the rotational centerline C increases from the press-fitting start position Psta toward the press-fitting end position Pend located respectively on the leading end side and the base end side at the one end of the rotor shaft 40. Thus, the force that the rotor shaft 40 receives from the gear shaft 42 through the rubber member 62 increases in the direction of the rotational centerline C from the leading end side toward the base end side at the one end of the rotor shaft 40. Therefore, when the gear shaft 42 is inclined under the influence of a radial force, a smaller moment acts on the rotor shaft 40 due to the inclination of the gear shaft 42, resulting in a smaller inclination of the rotor shaft 40 in this embodiment, compared with if a force that the rotor shaft 40 receives from the gear shaft 42 through the rubber member 62 is larger on the leading end side than the base end side at the one end of the rotor shaft 40 or equal on the leading end side and the base end side. As a result, vibration that occurs as the rotor 34 of the electric motor 30 coupled to the rotor shaft 40 rotates in an inclined state is mitigated, and so is occurrence of noise.

In this embodiment, the inner circumferential surface 62i of the rubber member 62 of the friction damper 50 is in contact with the outer circumferential surface 42o of the press-fitting part 42p of the protrusion 42t of the gear shaft 42, and the inside diameter D62i of the rubber member 62 before being press-fitted decreases from the press-fitting start position Psta toward the press-fitting end position Pend located respectively on the leading end side and the base end side at the one end of the rotor shaft 40. Thus configured, the rubber member 62 while being press-fitted receives a small resistance from the gear shaft 42 at the start of press fitting and this resistance becomes gradually larger toward the end of press fitting, which makes it easy to assemble the rotor shaft 40 and the gear shaft 42. The rubber member 62 is press-fitted between the gear shaft 42 and the rotor shaft 40, with a force that the rotor shaft 40 receives from the gear shaft 42 through the rubber member 62 increasing in the direction of the rotational centerline C from the press-fitting start position Psta toward the press-fitting end position Pend located respectively on the leading end side and the base end side at the one end of the rotor shaft 40. As a result, vibration that occurs as the rotor 34 of the electric motor 30 coupled to the rotor shaft 40 rotates in an inclined state is mitigated, and so is occurrence of noise.

In this embodiment, the inner circumferential surface 62i of the rubber member 62 of the friction damper 50 is in contact with the outer circumferential surface 42o of the press-fitting part 42p of the protrusion 42t of the gear shaft 42, and the thickness T62 of the rubber member 62 before being press-fitted increases from the press-fitting start position Psta toward the press-fitting end position Pend located respectively on the leading end side and the base end side at the one end of the rotor shaft 40. Thus configured, the rubber member 62 while being press-fitted receives a small resistance from the gear shaft 42 at the start of press fitting and this resistance becomes gradually larger toward the end of press fitting. A force that the rotor shaft 40 receives from the gear shaft 42 through the rubber member 62 increases in the direction of the rotational centerline C from the leading end side toward the base end side at the one end of the rotor shaft 40. Thus, the rotor shaft 40 and the gear shaft 42 are easy to assemble. Moreover, gear rattling sound that occurs at the spline-fitting part 28 due to rotational variation is reduced, and occurrence of noise attributable to inclination of the rotor shaft 40 under a moment acting thereon due to inclination of the gear shaft 42 is mitigated.

In this embodiment, the electric motor 30 is a vehicle driving source. When the electric motor 30 is a vehicle driving source, gear rattling sound (noise) that occurs at the spline-fitting part 28 due to rotational variation in reduced. Moreover, a moment acting on the rotor shaft 40 due to inclination of the gear shaft 42 is reduced, so that noise that occurs as the rotor 34 of the electric motor 30 coupled to the rotor shaft 40 rotates in an inclined state is mitigated. With noise occurring in the transmission system 14 thus reduced, an unpleasant feeling that a driver of the vehicle 10 feels is alleviated.

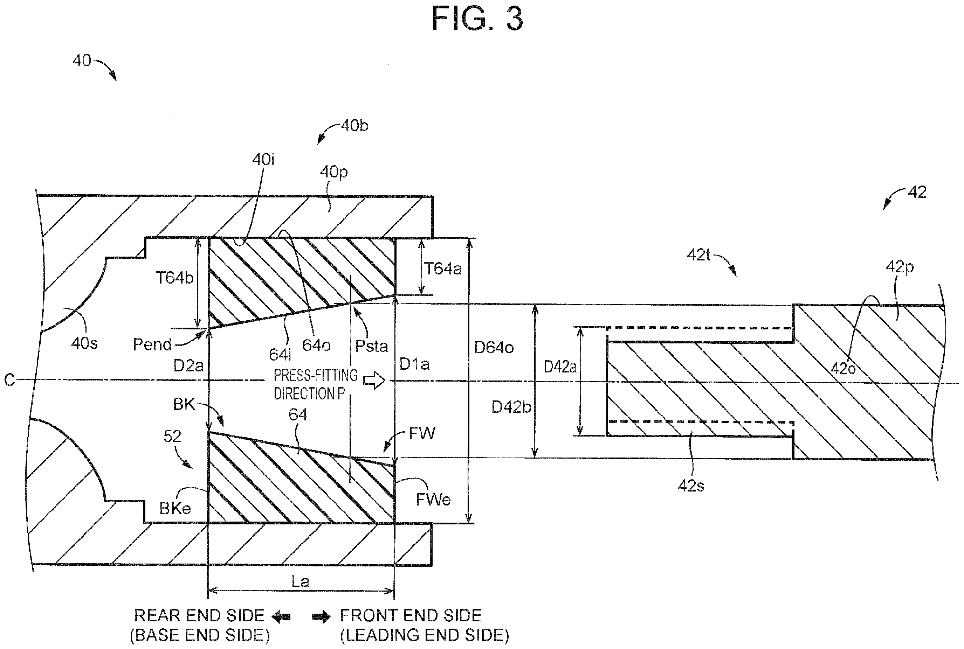

FIG. 3 is a sectional view of the rotor shaft 40, the gear shaft 42, and a friction damper 52 of a transmission system 14 according to a second embodiment of the present invention taken along the direction of the rotational centerline C, illustrating press fitting of the friction damper 52. The configuration of the second embodiment is substantially the same as that of the first embodiment, with the only difference being that the friction damper 52 is provided instead of the friction damper 50. As with FIG. 2 of the first embodiment, FIG. 3 shows a state before the friction damper 52 is press-fitted.

The friction damper 52 is constructed by a rubber member 64 instead of the metal member 60 and the rubber member 62 of the first embodiment. The rubber member 64 is an example of the "elastic member" of the present invention.

In the direction of the rotational centerline C, the length of the rubber member 64 from the front end FWe to the rear end BKe is a length La.

The rubber member 64 has a cylindrical shape centered at the rotational centerline C. An outer circumferential surface 64o of the rubber member 64 is in contact with the inner circumferential surface 40i of the press-fitting part 40p. An outside diameter D64o of the rubber member 64 is constant from the front end FWe toward the rear end BKe and equal to the inside diameter of the press-fitting part 40p. Thus, the rubber member 64 can be fitted on the inner circumferential surface 40i of the press-fitting part 40p.

In the direction of the rotational centerline C, a thickness T64 of the rubber member 64 increases (gradually) from a thickness T64a [mm] to a thickness T64b [mm] (> T64a) as the rubber member 64 extends from the front end FWe toward the rear end BKe.

An inside diameter D64i [mm] of the rubber member 64 decreases (gradually) from the front end FWe toward the rear end BKe. The inside diameter D64i of the rubber member 64 at the front end FWe is a diameter D1a, and the inside diameter D64i of the rubber member 64 at the rear end BKe is a diameter D2a (< D1a). As seen in the section along the direction of the rotational centerline C shown in FIG. 3, an inner circumferential surface 64i of the rubber member 64 is sloped from the front end FWe toward the rear end BKe. Thus, as seen in the section along the direction of the rotational centerline C, the inner circumferential surface 64i of the rubber member 64 is sloped from the press-fitting start position Psta toward the press-fitting end position Pend. This slope has a constant angle relative to the rotational centerline C. The inner circumferential surface 64i is an example of the "one circumferential surface" of the present invention.

In the second embodiment, the inner circumferential surface 64i of the rubber member 64 forming the friction damper 52 is in contact with the outer circumferential surface 42o of the press-fitting part 42p of the protrusion 42t of the gear shaft 42; the inside diameter D64i of the rubber member 64 before being press-fitted decreases from the press-fitting start position Psta toward the press-fitting end position Pend located respectively on the leading end side and the base end side at the one end of the rotor shaft 40; and the thickness T64 of the rubber member 64 before being press-fitted increases from the press-fitting start position Psta toward the press-fitting end position Pend located respectively on the leading end side and the base end side at the one end of the rotor shaft 40. The amount of compression of the rubber member 64 in the radial direction centered at the rotational centerline C increases from the press-fitting start position Psta toward the press-fitting end position Pend located respectively on the leading end side and the base end side at the one end of the rotor shaft 40. The electric motor 30 is a vehicle driving source. Thus configured, the second embodiment can produce the same effects as the first embodiment.

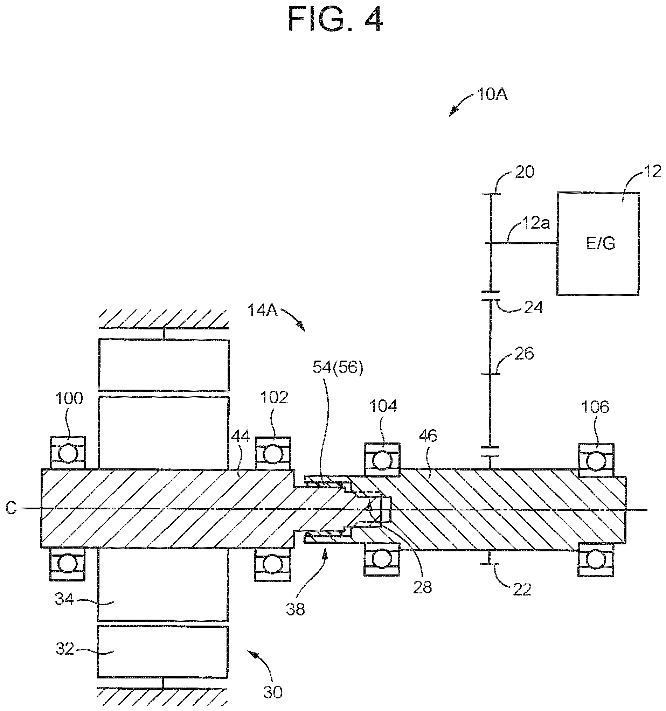

FIG. 4 is a schematic view of a vehicle 10A equipped with a transmission system 14A according to a third embodiment of the present invention. FIG. 4 of this embodiment is substantially the same as the schematic view of FIG. 1 of the first embodiment, with the only difference being that a rotor shaft 44, a gear shaft 46, and a friction damper 54 are provided instead of the rotor shaft 40, the gear shaft 42, and the friction damper 50, respectively, of the first embodiment. The reference sign in parentheses in FIG. 4 is for a fourth embodiment to be described later.

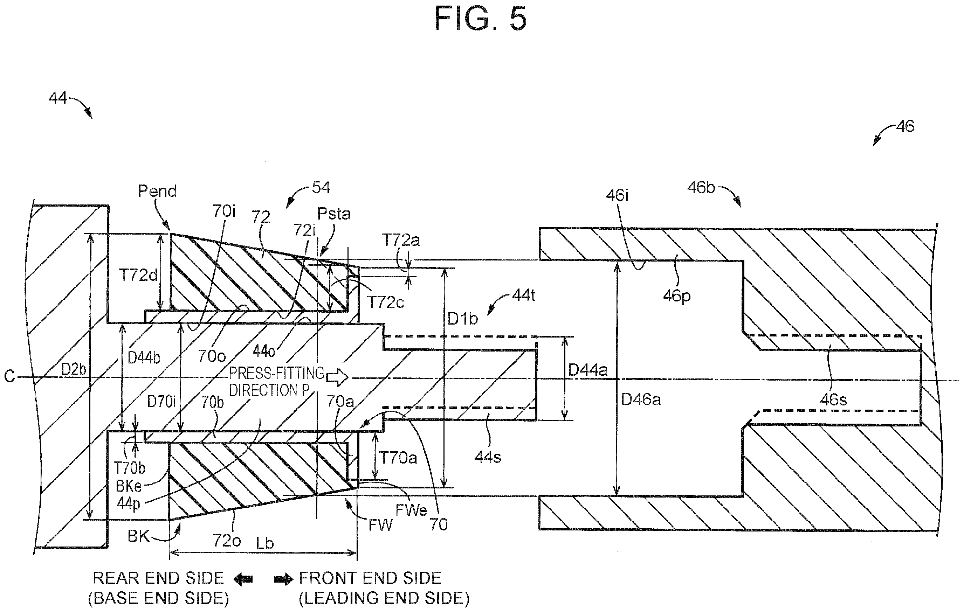

The rotor shaft 44 has an outer circumferential surface 44o (see FIG. 5) and the gear shaft 46 has an inner circumferential surface 46i (see FIG. 5) that face each other in a radial direction centered at the rotational centerline C and are spline-fitted with each other at the spline-fitting part 28. The friction damper 54 is press-fitted in an annular space between the outer circumferential surface 44o of the rotor shaft 44 and the inner circumferential surface 46i of the gear shaft 46, at the elastic member press-fitting part 38 adjacent to the spline-fitting part 28 in the direction of the rotational centerline C. The elastic member press-fitting part 38 is located between the second bearing 102 and the third bearing 104 in the direction of the rotational centerline C.

FIG. 5 is a sectional view of the rotor shaft 44, the gear shaft 46, and the friction damper 54 of the transmission system 14A shown in FIG. 4 taken along the direction of the rotational centerline C, illustrating press fitting of the friction damper 54. The friction damper 54 of this embodiment is constructed by a metal member 70 and a rubber member 72 instead of the metal member 60 and the rubber member 62, respectively, that form the friction damper 50 of the first embodiment. FIG. 5 shows a state after the friction damper 54 is fitted on the outer circumferential surface 44o of a press-fitting part 44p in a protrusion 44t of the rotor shaft 44 and before the friction damper 54 is inserted into an inner circumferential side of a bore section 46b of the gear shaft 46, i.e., before the friction damper 54 is press-fitted.

The protrusion 44t extending along the direction of the rotational centerline C from a central portion of the rotor shaft 44 in the radial direction centered at the rotational centerline C is provided on a side of the rotor shaft 44 closer to the gear shaft 46 that is a one end side of the rotor shaft 44. Spline teeth 44s are provided on a part of the outer circumferential surface 44o, on a leading end side of the protrusion 44t in the direction of the rotational centerline C. A part of the rotor shaft 44 closer to the center of gravity thereof than a portion of the protrusion 44t at which the spline teeth 44s are provided is in the direction of the rotational centerline C is the press-fitting part 44p at which the friction damper 54 is press-fitted. The bore section 46b that is hollow at a central portion in the radial direction centered at the rotational centerline C is provided on a side of the gear shaft 46 closer to the rotor shaft 44 that is a one end side of the gear shaft 46. A part of the bore section 46b on an open side in the direction of the rotational centerline C is a press-fitting part 46p at which the friction damper 54 is press-fitted. Spline teeth 46s are provided on a part of an inner circumferential surface 46i of the gear shaft 46, on a side closer to the center of gravity thereof than the press-fitting part 46p of the bore section 46b is in the direction of the rotational centerline C.

The friction damper 54 includes the metal member 70 and the rubber member 72.

The configuration of the friction damper 54 is substantially the same as that of the friction damper 50 of the first embodiment. However, in the friction damper 54, unlike in the friction damper 50, the rubber member 72 is fitted on an outer circumferential side of the metal member 70 in the radial direction centered at the rotational centerline C, and thus the shape of the friction damper 54 is reversed from that of the friction damper 50 in the radial direction.

In the direction of the rotational centerline C, the length of the rubber member 72 from the front end FWe to the rear end BKe is a length Lb [mm]. In the direction of the rotational centerline C, the length of the metal member 70 from a front end to a rear end is longer than the length Lb.

The metal member 70 has a cylindrical part 70b centered at the rotational centerline C and an outer protruding part 70a provided at a front-end portion of the cylindrical part 70b and protruding toward the outer circumferential side. In the radial direction centered at the rotational centerline C, a thickness T70 of the metal member 70 at a front-end portion is a thickness T70a [mm], and the thickness T70 of the metal member 70 at a rear-end portion is a thickness T70b.

An inner circumferential surface 70i of the metal member 70 faces the outer circumferential surface 44o of the press-fitting part 44p. An inside diameter D70i of the metal member 70 is constant from a front end to a rear end of the metal member 70 and equal to an outside diameter D44b of the press-fitting part 44p. Thus, the metal member 70 can be fitted on the outer circumferential surface 44o of the press-fitting part 44p with the outer circumferential surface 44o of the press-fitting part 44p in contact with the inner circumferential surface 70i of the metal member 70.

The rubber member 72 has a cylindrical shape centered at the rotational centerline C. The rubber member 72 is fitted on the metal member 70 with an inner circumferential surface 72i of the rubber member 72 and the outer circumferential surface 70o of the metal member 70 in contact with each other. A thickness T72 of the rubber member 72 at the front end FWe is a thickness T72a [mm], and the thickness T72 of the rubber member 72 at the rear end BKe is a thickness T72d [mm]. The rubber member 72 has a lower elastic modulus than the press-fitting part 44p of the rotor shaft 44 and the press-fitting part 46p of the gear shaft 46.

In the direction of the rotational centerline C, the thickness T72 of the rubber member 72 increases from the front end FWe toward the rear end BKe of the rubber member 72 as follows. In a region in the direction of the rotational centerline C where the outer protruding part 70a is not located, the thickness T72 of the rubber member 72 increases (gradually) from a thickness T72c [mm] to the thickness T72d (> T72c) as the rubber member 72 extends from the front-end portion FW toward the rear-end portion BK. In a region in the direction of the rotational centerline C where the outer protruding part 70a is located, the thickness T72 of the rubber member 72 increases (gradually) from the thickness T72a to a thickness T72b [mm] {= T72c - (T70a - T70b) > T72a} as the rubber member 72 extends from the front-end portion FW toward the rear-end portion BK. From the region in the direction of the rotational centerline C where the outer protruding part 70a is located to the region where the outer protruding part 70a is not located, the thickness T72 of the rubber member 72 increases suddenly from the thickness T72b to the thickness T72c (> T72b) in a discontinuous manner. Thus, the thickness T72 of the rubber member 72 installed on the rotor shaft 44 and yet to be press-fitted increases from the press-fitting start position Psta toward the press-fitting end position Pend. The press-fitting start position Psta and the press-fitting end position Pend in this embodiment will be described later.

An outside diameter D72o [mm] of the rubber member 72 increases (gradually) from the front end FWe toward the rear end BKe of the rubber member 72. The outside diameter D72o of the rubber member 72 at the front end FWe is a diameter D1b [mm], and the outside diameter D72o of the rubber member 72 at the rear end BKe is a diameter D2b [mm] (> D1b). Thus, the outside diameter D72o of the rubber member 72 installed on the rotor shaft 44 and yet to be press-fitted increases from the press-fitting start position Psta toward the press-fitting end position Pend. As seen in the section along the direction of the rotational centerline C shown in FIG. 5, the outer circumferential surface 72o of the rubber member 72 is sloped from the front end FWe toward the rear end BKe. Thus, as seen in the section along the direction of the rotational centerline C, the outer circumferential surface 72o of the rubber member 72 is sloped from the press-fitting start position Psta toward the press-fitting end position Pend. This slope has a constant angle relative to the rotational centerline C. The outer circumferential surface 72o is an example of the "one circumferential surface" of the present invention.

An outside diameter D44b [mm] of the rotor shaft 44 at the press-fitting part 44p is larger than an outside diameter D44a [mm] of the spline teeth 44s provided on the outer circumferential surface 44o. An inside diameter D46a [mm] of the gear shaft 46 at the press-fitting part 46p is larger than the inside diameter of the gear shaft 46 at the part where the spline teeth 46s are provided. The inside diameter D46a of the press-fitting part 46p is constant in the direction of the rotational centerline C. The inside diameter D46a is larger than the diameter D1b and smaller than the diameter D2b.

Before being press-fitted, the friction damper 54 is first fitted, i.e., installed, on the outer circumferential surface 44o of the press-fitting part 44p in the protrusion 44t of the rotor shaft 44. Thereafter, the outer circumferential side of the rubber member 72 of the friction damper 54 fitted on the rotor shaft 44 is inserted into the gear shaft 46. In this embodiment, as shown in FIG. 5, a position in the direction of the rotational centerline C at which the outside diameter D72o of the rubber member 72 is equal to the inside diameter D46a of the press-fitting part 46p of the gear shaft 46 is the press-fitting start position Psta. The rear end BKe of the rubber member 72 is the press-fitting end position Pend.

As the rotor shaft 44 is thus inserted into the gear shaft 46 with the outer circumferential surface 72o of the rubber member 72 in contact with the inner circumferential surface 46i of the press-fitting part 46p of the gear shaft 46, the friction damper 54 is press-fitted between the outer circumferential surface 44o of the press-fitting part 44p and the inner circumferential surface 46i of the press-fitting part 46p. When the friction damper 54 has been press-fitted, the amount of compression of the rubber member 72 in the radial direction centered at the rotational centerline C increases from the press-fitting start position Psta toward the press-fitting end position Pend. Moreover, the metal member 70 has been embedded between the inner circumferential surface 72i of the rubber member 72 and the outer circumferential surface 44o of the press-fitting part 44p.

In this embodiment, the outer circumferential surface 72o of the rubber member 72 of the friction damper 54 is in contact with the inner circumferential surface 46i of the press-fitting part 46p of the bore section 46b of the gear shaft 46; the outside diameter D72o of the rubber member 72 before being press-fitted increases from the press-fitting start position Psta toward the press-fitting end position Pend located respectively on the leading end side and the base end side at the one end of the rotor shaft 44; and the thickness T72 of the rubber member 72 before being press-fitted increases from the press-fitting start position Psta toward the press-fitting end position Pend located respectively on the leading end side and the base end side at the one end of the rotor shaft 44. The amount of compression of the rubber member 72 in the radial direction centered at the rotational centerline C increases from the press-fitting start position Psta toward the press-fitting end position Pend located respectively on the leading end side and the base end side at the one end of the rotor shaft 44. The electric motor 30 is a vehicle driving source. Thus configured, this embodiment can produce the same effects as the first embodiment.

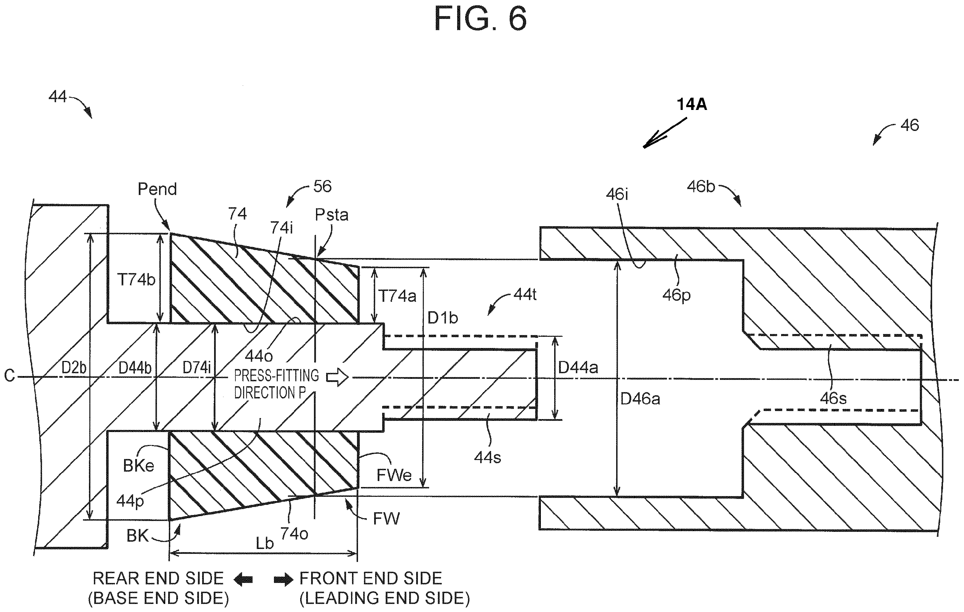

FIG. 6 is a sectional view of the rotor shaft 44, the gear shaft 46, and a friction damper 56 of a transmission system 14A according to a fourth embodiment of the present invention taken along the direction of the rotational centerline C, illustrating press fitting of the friction damper 56. The configuration of this embodiment is substantially the same as that of the third embodiment, with the only difference being that the friction damper 56 is provided instead of the friction damper 54. As with FIG. 5 of the third embodiment, FIG. 6 shows a state before the friction damper 56 is press-fitted.

The friction damper 56 is constructed by a rubber member 74 instead of the metal member 70 and the rubber member 72 of the third embodiment. The rubber member 74 is an example of the "elastic member" of the present invention.

In the direction of the rotational centerline C, the length of the rubber member 74 from the front end FWe to the rear end BKe is a length Lb.

The rubber member 74 has a cylindrical shape centered at the rotational centerline C. An inner circumferential surface 74i of the rubber member 74 is in contact with the outer circumferential surface 44o of the press-fitting part 44p. An inside diameter D74i of the rubber member 74 is constant from the front end FWe to the rear end BKe and equal to the outside diameter D44b of the press-fitting part 44p. Thus, the rubber member 74 can be fitted on the outer circumferential surface 44o of the press-fitting part 44p.

In the direction of the rotational centerline C, a thickness T74 of the rubber member 74 increases (gradually) from a thickness T74a [mm] to a thickness T74b [mm] (> T74a) as the rubber member 74 extends from the front end FWe toward the rear end BKe.

An outside diameter D74o [mm] of the rubber member 74 increases (gradually) from the front end FWe toward the rear end BKe. The outside diameter D74o of the rubber member 74 at the front end FWe is a diameter D1b, and the outside diameter D74o of the rubber member 74 at the rear end BKe is a diameter D2b (>D1b). As seen in the section along the direction of the rotational centerline C shown in FIG. 6, an outer circumferential surface 74o of the rubber member 74 is sloped from the front end FWe toward the rear end BKe. Thus, as seen in the section along the direction of the rotational centerline C, the outer circumferential surface 74o of the rubber member 74 is sloped from the press-fitting start position Psta toward the press-fitting end position Pend. This slope has a constant angle relative to the rotational centerline C. The outer circumferential surface 74o is an example of the "one circumferential surface" of the present invention.

In this embodiment, the outer circumferential surface 74o of the rubber member 74 forming the friction damper 56 is in contact with the inner circumferential surface 46i of the press-fitting part 46p of the bore section 46b of the gear shaft 46; the outside diameter D74o of the rubber member 74 before being press-fitted increases from the press-fitting start position Psta toward the press-fitting end position Pend located respectively on the leading end side and the base end side at the one end of the rotor shaft 44; and the thickness T74 of the rubber member 74 before being press-fitted increases from the press-fitting start position Psta toward the press-fitting end position Pend located respectively on the leading end side and the base end side at the one end of the rotor shaft 44. The amount of compression of the rubber member 74 in the radial direction centered at the rotational centerline C increases from the press-fitting start position Psta toward the press-fitting end position Pend located respectively on the leading end side and the base end side at the one end of the rotor shaft 44. The electric motor 30 is a vehicle driving source. Thus configured, this embodiment can produce the same effects as the third embodiment.

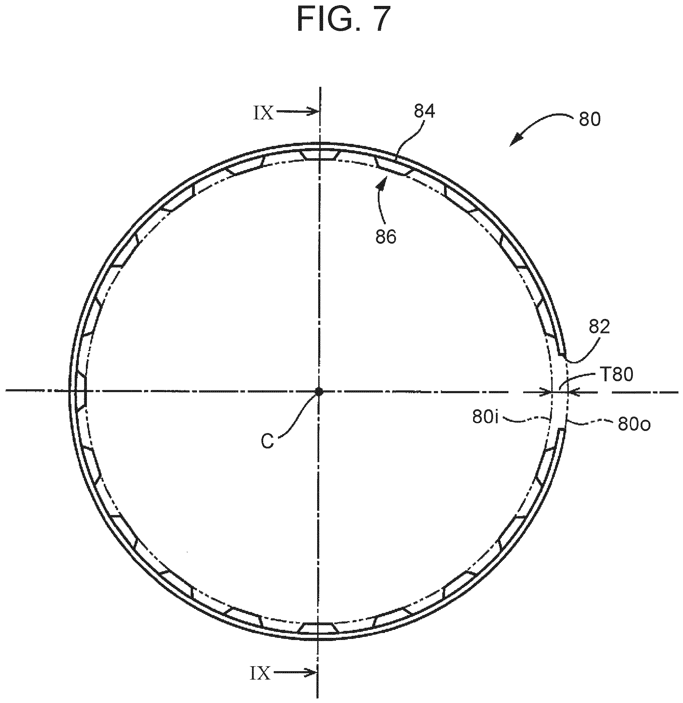

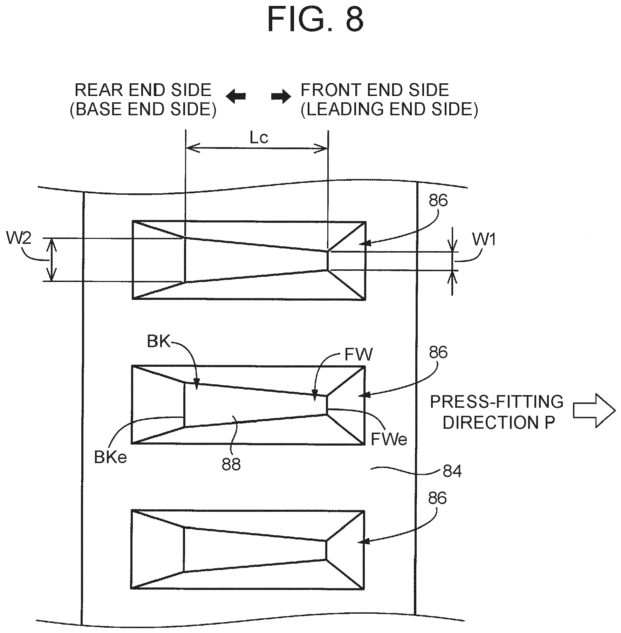

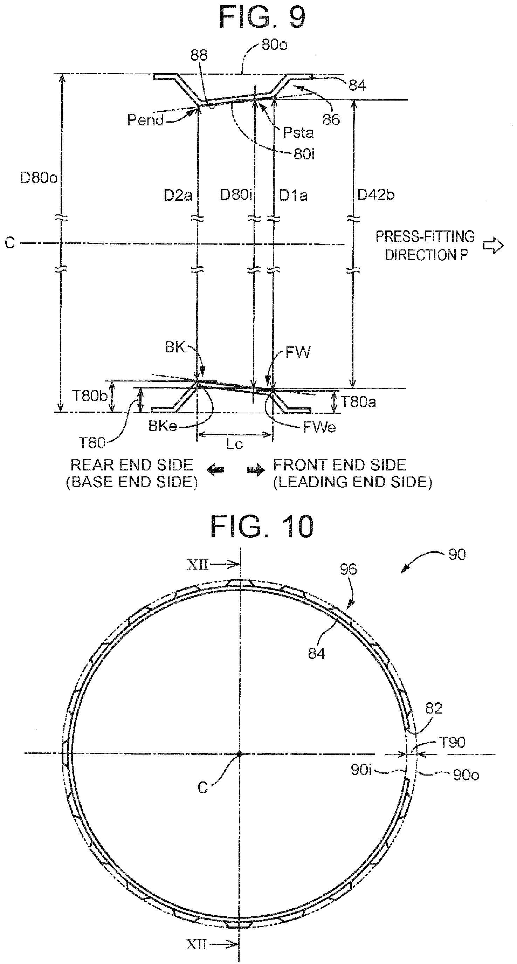

FIG. 7 is a view of a tolerance ring 80 according to a fifth embodiment of the present invention as seen from the direction of the rotational centerline C. FIG. 8 is a view of the tolerance ring 80 shown in FIG. 7, as developed in a circumferential direction and seen from an inner circumferential side in a radial direction centered at the rotational centerline C. FIG. 9 is a sectional view of the tolerance ring 80 taken along cutting line IX-IX shown in FIG. 7. The configuration of this embodiment is substantially the same as that of the first embodiment, with the only difference being that the tolerance ring 80 is press-fitted instead of the friction damper 50.

The tolerance ring 80 is press-fitted between the inner circumferential surface 40i of the rotor shaft 40 and the outer circumferential surface 42o of the gear shaft 42 that face each other in the radial direction centered at the rotational centerline C.

The tolerance ring 80 is a metal elastic member. The tolerance ring 80 is a metal member that includes a substantially ring-shaped annular part 84 having a cutout 82 formed at a portion in a circumferential direction, and a plurality of inner projections 86 that is provided so as to project from the annular part 84 toward an inner side in the radial direction centered at the rotational centerline C. Having the cutout 82 formed at a portion in the circumferential direction, the annular part 84 is elastically deformable, and the tolerance ring 80 can be fitted on the inner circumferential surface 40i of the press-fitting part 40p in advance. The tolerance ring 80 is an example of the "elastic member" of the present invention.

An outer circumferential surface 80o, an inner circumferential surface 80i, a thickness T80, etc. of the tolerance ring 80 are defined as follows based on a part of the tolerance ring 80 that, as a result of press fitting, comes into contact with the inner circumferential surface 40i of the rotor shaft 40 and the outer circumferential surface 42o of the gear shaft 42 that face each other.

As shown in FIG. 7 and FIG. 9, a surface of the tolerance ring 80 on the outer circumferential side in the radial direction centered at the rotational centerline C that, as a result of press fitting, comes into contact with the inner circumferential surface 40i and the outer circumferential surface 42o of the rotor shaft 40 and the gear shaft 42 that face each other is defined as the outer circumferential surface 80o of the tolerance ring 80. In this embodiment, a columnar surface circumscribed on the annular part 84 is the outer circumferential surface 80o of the tolerance ring 80. A surface of the tolerance ring 80 on the inner circumferential side in the radial direction centered at the rotational centerline C that, as a result of press fitting, comes into contact with the inner circumferential surface 40i and the outer circumferential surface 42o of the rotor shaft 40 and the gear shaft 42 that face each other is defined as the inner circumferential surface 80i of the tolerance ring 80. In this embodiment, a conical surface inscribed on projection surfaces 88 is the inner circumferential surface 80i of the tolerance ring 80.

The diameter of the inner circumferential surface 80i is defined as an inside diameter D80i [mm] of the tolerance ring 80, and the diameter of the outer circumferential surface 80o is defined as the outside diameter D80o [mm] of the tolerance ring 80. The distance between the outer circumferential surface 80o of the tolerance ring 80 and the inner circumferential surface 80i of the tolerance ring 80 in the radial direction centered at the rotational centerline C is defined as the thickness T80 [mm] of the tolerance ring 80. In FIG. 9, the inside diameter D80i and the thickness T80 of the tolerance ring 80 at the press-fitting start position Psta are illustrated.

Of a region in the direction of the rotational centerline C where the projection surfaces 88 are located, a portion on a front side in the press-fitting direction P is defined as a "front-end portion FW" of the tolerance ring 80, while a portion on a rear side in the press-fitting direction P is defined as a "rear-end portion BK" of the tolerance ring 80. As shown in FIG. 9, a most front side of the front-end portion FW of the tolerance ring 80 in the press-fitting direction P is defined as a "front end FWe" of the tolerance ring 80, and a most rear side of the rear-end portion BK of the tolerance ring 80 in the press-fitting direction P is defined as a "rear end BKe" of the tolerance ring 80.

The inner projections 86 are disposed substantially at the center of the annular part 84 in a width direction of the annular part 84 (the left-right direction in FIG. 8). The inner projections 86 are disposed at regular angular intervals in the circumferential direction, and a substantially flat surface is formed between the inner projections 86 adjacent to each other in the circumferential direction. Each inner projection 86 has a trapezoidal shape as seen from the direction of the rotational centerline C. The projection surface 88 that comes into contact with the outer circumferential surface 42o of the gear shaft 42 upon press fitting is formed on the inner side of each inner projection 86 in the radial direction. In the direction of the rotational centerline C, the length of the projection surface 88 from the front end FWe to the rear end BKe is a length Lc [mm]. In the circumferential direction, the length of the projection surface 88 at the front end FWe is a width W1 [mm], and the length of the projection surface 88 at the rear end BKe is a width W2 [mm] (> W1). The inner projections 86 are configured to be able to deform elastically in the radial direction centered at the rotational centerline C.

The elastic modulus of the inner projections 86 of the tolerance ring 80 is set to be lower than the elastic moduli of the press-fitting part 40p of the rotor shaft 40 and the press-fitting part 42p of the gear shaft 42. As the gear shaft 42 is inserted into the rotor shaft 40 with the projection surfaces 88 of the inner projections 86 in contact with the outer circumferential surface 42o of the press-fitting part 42p, the tolerance ring 80 is press-fitted between the inner circumferential surface 40i of the press-fitting part 40p and the outer circumferential surface 42o of the press-fitting part 42p.

In the direction of the rotational centerline C, the thickness T80 of the tolerance ring 80 increases (gradually) from a thickness T80a [mm] to a thickness T80b [mm] (> T80a) as the tolerance ring 80 extends from the front end FWe toward the rear end BKe. Thus, the thickness T80 of the tolerance ring 80 installed on the rotor shaft 40 and yet to be press-fitted increases from the press-fitting start position Psta toward the press-fitting end position Pend. The press-fitting start position Psta and the press-fitting end position Pend in this embodiment will be described later. The inside diameter D80i of the tolerance ring 80 decreases (gradually) from the front end FWe toward the rear end BKe. The inside diameter D80i of the tolerance ring 80 at the front end FWe is a diameter D1a, and the inside diameter D80i of the tolerance ring 80 at the rear end BKe is a diameter D2a (< D1a). Thus, the inside diameter D80i of the tolerance ring 80 installed on the rotor shaft 40 and yet to be press-fitted decreases from the press-fitting start position Psta toward the press-fitting end position Pend. As seen in the section along the direction of the rotational centerline C shown in FIG. 9, the inner circumferential surface 80i of the tolerance ring 80 is sloped from the front end FWe toward the rear end BKe. Thus, as seen in the section along the direction of the rotational centerline C, the inner circumferential surface 80i of the tolerance ring 80 is sloped from the press-fitting start position Psta toward the press-fitting end position Pend. This slope has a constant angle relative to the rotational centerline C. The inner circumferential surface 80i is an example of the "one circumferential surface" of the present invention.

When the gear shaft 42 is inserted into the inner circumferential side of the tolerance ring 80 fitted on the rotor shaft 40, as shown in FIG. 9, the inner circumferential surface 80i of the tolerance ring 80 comes first into contact with the outer circumferential surface 42o of the press-fitting part 42p of the gear shaft 42 at the press-fitting start position Psta in the direction of the rotational centerline C at which the inside diameter D80i of the tolerance ring 80 is equal to the outside diameter D42b of the press-fitting part 42p of the gear shaft 42. The inner circumferential surface 80i of the tolerance ring 80 comes last into contact with the outer circumferential surface 42o of the press-fitting part 42p of the gear shaft 42 at the press-fitting end position Pend that is the rear end BKe of the tolerance ring 80.

Resistance that the tolerance ring 80 receives from the gear shaft 42 (also resistance that the gear shaft 42 receives from the tolerance ring 80) while the tolerance ring 80 is press-fitted increases gradually from the press-fitting start position Psta toward the press-fitting end position Pend. When the tolerance ring 80 has been press-fitted, the tolerance ring 80 has been press-fitted between the outer circumferential surface 42o of the gear shaft 42 and the inner circumferential surface 40i of the rotor shaft 40, with the amount of compression of the tolerance ring 80 in the radial direction centered at the rotational centerline C increasing from the press-fitting start position Psta toward the press-fitting end position Pend.

In this embodiment, the inner circumferential surface 80i of the tolerance ring 80 is in contact with the outer circumferential surface 42o of the press-fitting part 42p of the protrusion 42t of the gear shaft 42; the inside diameter D80i of the tolerance ring 80 before being press-fitted decreases from the press-fitting start position Psta toward the press-fitting end position Pend located respectively on the leading end side and the base end side at the one end of the rotor shaft 40; and the thickness T80 of the tolerance ring 80 before being press-fitted increases from the press-fitting start position Psta toward the press-fitting end position Pend located respectively on the leading end side and the base end side at the one end of the rotor shaft 40. The amount of compression of the tolerance ring 80 in the radial direction centered at the rotational centerline C increases from the press-fitting start position Psta toward the press-fitting end position Pend located respectively on the leading end side and the base end side at the one end of the rotor shaft 40. The electric motor 30 is a vehicle driving source. Thus configured, this embodiment can produce the same effects as the first embodiment.

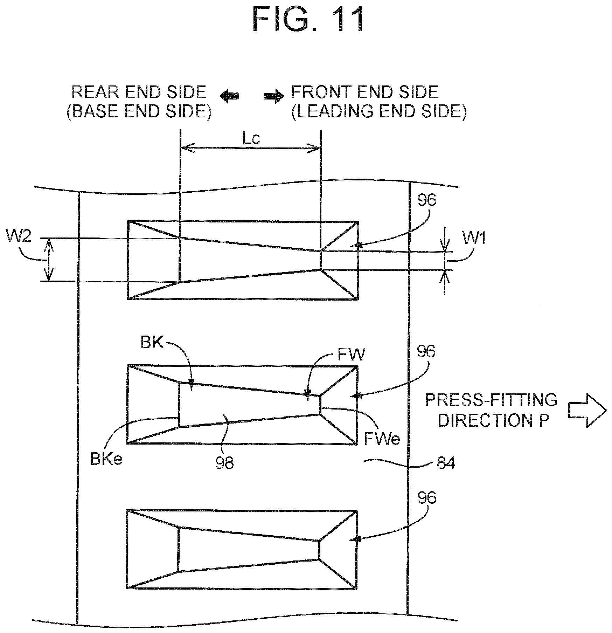

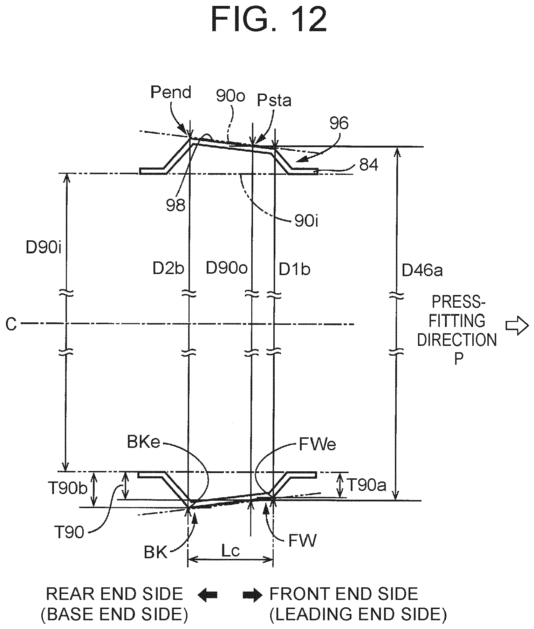

FIG. 10 is a view of a tolerance ring 90 according to a sixth embodiment of the present invention as seen from the direction of the rotational centerline C. FIG. 11 is a view of the tolerance ring 90 shown in FIG. 10, as developed in a circumferential direction and seen from an outer circumferential side in a radial direction centered at the rotational centerline C. FIG. 12 is a sectional view of the tolerance ring 90 taken along cutting line XII-XII shown in FIG. 10. The configuration of this embodiment is substantially the same as that of the third embodiment, with the only difference being that the tolerance ring 90 is press-fitted instead of the friction damper 54.

The tolerance ring 90 is press-fitted between the outer circumferential surface 44o of the rotor shaft 44 and the inner circumferential surface 46i of the gear shaft 46 that face each other in the radial direction centered at the rotational centerline C.

The configuration of the tolerance ring 90 is substantially the same as that of the tolerance ring 80 of the fifth embodiment, with the only difference being that, in the annular part 84, a plurality of outer projections 96 is provided instead of the inner projections 86. The tolerance ring 90 is an example of the "elastic member" of the present invention.

Unlike the inner projections 86 of the tolerance ring 80, the outer projections 96 are provided so as to project from the annular part 84 toward the outer side in the radial direction centered at the rotational centerline C. As shown in FIG. 10 and FIG. 11, the shape of the outer projections 96 is substantially the same as that of the inner projections 86 of the tolerance ring 80 shown in FIG. 7 and FIG. 8, but the outer projections 96 are provided on the outer side in the radial direction unlike the inner projections 86 of the tolerance ring 80. A projection surface 98 that comes into contact with the inner circumferential surface 46i of the gear shaft 46 as a result of press fitting is formed on the outer side of each outer projection 96 in the radial direction.

The elastic modulus of the outer projections 96 of the tolerance ring 90 is set to be lower than the elastic moduli of the press-fitting part 44p of the rotor shaft 44 and the press-fitting part 46p of the gear shaft 46. As the rotor shaft 44 is inserted into the gear shaft 46 with the projection surfaces 98 of the outer projections 96 in contact with the inner circumferential surface 46i of the press-fitting part 46p, the tolerance ring 90 is press-fitted between the outer circumferential surface 44o of the press-fitting part 44p and the inner circumferential surface 46i of the press-fitting part 46p.

In this embodiment, as shown in FIG. 10 and FIG. 12, a conical surface circumscribed on the projection surfaces 98 is an outer circumferential surface 90o of the tolerance ring 90, and a columnar surface inscribed on the annular part 84 is an inner circumferential surface 90i of the tolerance ring 90. An inside diameter D90i [mm] of the tolerance ring 90 is the diameter of the inner circumferential surface 90i, and an outside diameter D90o [mm] of the tolerance ring 90 is the diameter of the outer circumferential surface 90o. The distance between the outer circumferential surface 90o and the inner circumferential surface 90i in the radial direction centered at the rotational centerline C is a thickness T90 [mm] of the tolerance ring 90. In FIG. 12, the outside diameter D90o and the thickness T90 of the tolerance ring 90 at the press-fitting start position Psta are illustrated. Of a region in the direction of the rotational centerline C where the projection surfaces 98 are provided, a portion on the front side in the press-fitting direction P is a "front-end portion FW" of the tolerance ring 90, and a portion on the rear side in the press-fitting direction P is a "rear-end portion BK" of the tolerance ring 90. As shown in FIG. 12, a most front side of the front-end portion FW of the tolerance ring 90 in the press-fitting direction P is a "front end FWe" of the tolerance ring 90, and a most rear side of the rear-end portion BK of the tolerance ring 90 in the press-fitting direction P is a "rear end BKe" of the tolerance ring 90.

In the direction of the rotational centerline C, the thickness T90 of the tolerance ring 90 increases (gradually) from a thickness T90a [mm] to a thickness T90b [mm] (> T90a) as the tolerance ring 90 extends from the front end FWe toward the rear end BKe. Thus, the thickness T90 of the tolerance ring 90 installed on the rotor shaft 44 and yet to be press-fitted increases from the press-fitting start position Psta toward the press-fitting end position Pend. The press-fitting start position Psta and the press-fitting end position Pend in this embodiment will be described later. The outside diameter D90o of the tolerance ring 90 increases (gradually) from the front end FWe toward the rear end BKe. The outside diameter D90o of the tolerance ring 90 at the front end FWe is a diameter D1b, and the outside diameter D90o of the tolerance ring 90 at the rear end BKe is a diameter D2b (> D1b). Thus, the outside diameter D90o of the tolerance ring 90 installed on the rotor shaft 44 and yet to be press-fitted increases from the press-fitting start position Psta toward the press-fitting end position Pend. As seen in the section along the direction of the rotational centerline C shown in FIG. 12, the outer circumferential surface 90o of the tolerance ring 90 is sloped from the front end FWe toward the rear end BKe. Thus, as seen in the section along the direction of the rotational centerline C, the outer circumferential surface 90o of the tolerance ring 90 is sloped from the press-fitting start position Psta toward the press-fitting end position Pend. This slope has a constant angle relative to the rotational centerline C. The outer circumferential surface 90o is an example of the "one circumferential surface" of the present invention.

When the tolerance ring 90 fitted on the rotor shaft 44 is inserted into the inner circumferential side of the bore section 46b of the gear shaft 46, as shown in FIG. 12, the outer circumferential surface 90o of the tolerance ring 90 comes first into contact with the inner circumferential surface 46i of the press-fitting part 46p of the gear shaft 46 at the press-fitting start position Psta in the direction of the rotational centerline C at which the outside diameter D90o of the tolerance ring 90 is equal to the inside diameter D46a of the press-fitting part 46p of the gear shaft 46. The outer circumferential surface 90o of the tolerance ring 90 comes last into contact with the inner circumferential surface 46i of the press-fitting part 46p of the gear shaft 46 at the press-fitting end position Pend that is the rear end BKe of the tolerance ring 90. When the tolerance ring 90 has been press-fitted, the amount of compression of the tolerance ring 90 in the radial direction centered at the rotational centerline C increases from the press-fitting start position Psta toward the press-fitting end position Pend.

In this embodiment, the outer circumferential surface 90o of the tolerance ring 90 is in contact with the inner circumferential surface 46i of the press-fitting part 46p of the bore section 46b of the gear shaft 46; the outside diameter D90o of the tolerance ring 90 before being press-fitted increases from the press-fitting start position Psta toward the press-fitting end position Pend located respectively on the leading end side and the base end side at the one end of the rotor shaft 44; and the thickness T90 of the tolerance ring 90 before being press-fitted increases from the press-fitting start position Psta toward the press-fitting end position Pend located respectively on the leading end side and the base end side at the one end of the rotor shaft 44. The amount of compression of the tolerance ring 90 in the radial direction centered at the rotational centerline C increases from the press-fitting start position Psta toward the press-fitting end position Pend located respectively on the leading end side and the base end side at the one end of the rotor shaft 44. The electric motor 30 is a vehicle driving source. Thus configured, this embodiment can produce the same effects as the third embodiment.

While the embodiments of the present invention have been described in detail above based on the drawings, the present invention can also be implemented in other forms.

In each of the first to sixth embodiments, in the direction of the rotational centerline C, the press-fitting start position Psta is located rearward of the front end FWe in the press-fitting direction P and the press-fitting end position Pend is located at the same position as the rear end BKe. However, the press-fitting start position Psta and the press-fitting end position Pend are not limited to these positions. For example, the press-fitting start position Psta may be located at the same position as the front end FWe, and the press-fitting end position Pend may be located frontward of the rear end BKe in the press-fitting direction P.

In the first, second, and fifth embodiments, as seen in the section along the direction of the rotational centerline C, the inner circumferential surface 62i of the rubber member 62, the inner circumferential surface 64i of the rubber member 64, and the inner circumferential surface 80i of the tolerance ring 80 before these members are press-fitted are sloped at a constant angle relative to the rotational centerline C, from the press-fitting start position Psta toward the press-fitting end position Pend located respectively on the side of the front-end portion FW and the side of the rear-end portion BK in the press-fitting direction P. In the third, fourth, and sixth embodiments, as seen in the section along the direction of the rotational centerline C, the outer circumferential surface 72o of the rubber member 72, the outer circumferential surface 74o of the rubber member 74, and the outer circumferential surface 90o of the tolerance ring 90 before these members are press-fitted are sloped at a constant angle relative to the rotational centerline C, from the press-fitting start position Psta toward the press-fitting end position Pend located respectively on the side of the front-end portion FW and the side of the rear-end portion BK in the press-fitting direction P. However, the angles of these slopes in the present invention are not limited to constant angles relative to the rotational centerline C, and these slopes may have any angles as long as the slopes do not have a step at which the resistance that the rubber members 62, 64, 72, 74 or the tolerance rings 80, 90 that are elastic members receive from the gear shafts 42, 46 while being press-fitted increases suddenly in a discontinuous manner. This is because, unless there is a step that causes a sudden increase in the resistance in a discontinuous manner, the elastic members while being press-fitted receive a small resistance from the gear shafts 42, 46 at the start of press fitting and this resistance becomes gradually larger toward the end of press fitting, which makes it easy to assemble the rotor shaft 40 and the gear shafts 42, 46.

In the first to sixth embodiments, the electric motor 30 that is the rotating machine is a vehicle driving source having a motor function, but the rotating machine is not limited to such an electric motor. For example, the rotating machine may be a so-called motor-generator that has a motor function as a vehicle driving source of the vehicles 10, 10A as well as a regeneration function (generator function) of converting kinetic energy of the vehicles 10, 10A into electricity. For example, when the rotating machine is a motor-generator, the rotor shafts 40, 44 transmit, to the motor generator, power transmitted thereto from the pair of driving wheels through the gear shafts 42, 46 upon application of engine braking.

The embodiments described above are merely examples of the present invention, and the present invention can be implemented also in other forms incorporating various changes and improvements that are made within the scope of the gist of the invention based on the knowledge of those skilled in the art.

## Claims

1. A transmission system (14; 14A), comprising:
a gear shaft (42; 46) configured to receive a force acting in a direction perpendicular to a rotational centerline;
a rotor shaft (40; 44) that is rotatably supported at both ends on the same rotational centerline as the gear shaft (42; 46), spline-fitted with the gear shaft (42; 46), and coupled to a rotor (34) of a rotating machine (30); and
an elastic member (62; 64; 72; 74; 80; 90) press-fitted between an inner circumferential surface and an outer circumferential surface of the gear shaft (42; 46) and the rotor shaft (40; 44) that face each other in a radial direction centered at the rotational centerline, an amount of compression of the elastic member (62; 64; 72; 74; 80; 90) in the radial direction increasing from a press-fitting start position toward a press-fitting end position located respectively on a leading end side and a base end side at one end of the rotor shaft (40; 44).

2. The transmission system (14) according to claim 1, wherein:
an inner circumferential surface of the elastic member (62; 64; 80) is in contact with an outer circumferential surface of the gear shaft (42); and
an inside diameter of the elastic member before (62; 64; 80) being press-fitted decreases from the press-fitting start position toward the press-fitting end position.

3. The transmission system (14) according to claim 2, wherein the elastic member (62; 64) is a cylindrical rubber member.

4. The transmission system (14) according to claim 2, wherein the elastic member (80) is a metal member that includes a substantially ring-shaped annular part (84) and a plurality of projections (86) provided so as to project inward in the radial direction.

5. The transmission system (14A) according to claim 1, wherein:
an outer circumferential surface of the elastic member (72; 74; 90) is in contact with an inner circumferential surface of the gear shaft (46); and
an outside diameter of the elastic member (72; 74; 90) before being press-fitted increases from the press-fitting start position toward the press-fitting end position.

6. The transmission system (14A) according to claim 5, wherein the elastic member (72; 74) is a cylindrical rubber member.

7. The transmission system (14A) according to claim 5, wherein the elastic member (90) is a metal member that includes a substantially ring-shaped annular part (84) and a plurality of projections (96) provided so as to project outward in the radial direction.

8. The transmission system (14; 14A) according to claim 1, wherein:
one circumferential surface of an inner circumferential surface and an outer circumferential surface of the elastic member (62; 64; 72; 74; 80; 90) is in contact with an outer circumferential surface or an inner circumferential surface of the gear shaft (42; 46); and
a thickness of the elastic member (62; 64; 72; 74; 80; 90) before being press-fitted increases from the press-fitting start position toward the press-fitting end position.

9. The transmission system (14) according to claim 8, wherein:
the one circumferential surface is the inner circumferential surface of the elastic member (62; 64; 80); and
an inside diameter of the elastic member (62; 64; 80) before being press-fitted decreases from the press-fitting start position toward the press-fitting end position.

10. The transmission system (14A) according to claim 8, wherein:
the one circumferential surface is the outer circumferential surface of the elastic member (72; 74; 90); and
an outside diameter of the elastic member (72; 74; 90) before being press-fitted increases from the press-fitting start position toward the press-fitting end position.

11. The transmission system (14; 14A) according to any one of claims 1 to 10, wherein the rotating machine (30) is a driving source of a vehicle (10) equipped with the transmission system (14; 14A).
